# EUROPÄISCHE PATENTSCHRIFT

(11) **EP 3 276 885 B1**
(45) Veröffentlichungstag und Bekanntmachung des Hinweises auf die Patenterteilung: **11.11.2020**
(21) Anmeldenummer: 17182894.0
(22) Anmeldetag: 25.07.2017
(51) Int. Cl.: H04L 12/28, H04L 12/24

(54) **VERFAHREN ZUR INBETRIEBNAHME EINES HEIMNETZES MIT GEBÄUDEINTERNER BASISSTATION UND GEBÄUDEINTERNEM ELEKTROGERÄT**
METHOD FOR STARTING UP A HOME NETWORK WITH INTERNAL BASE STATION AND INTERNAL ELECTRIC DEVICE
PROCÉDÉ DE MISE EN SERVICE D'UN RÉSEAU DOMESTIQUE À L'AIDE DE STATION DE BASE DANS LE BÂTIMENT ET APPAREIL ÉLECTRIQUE DANS LE BÂTIMENT

(30) Priorität: 29.07.2016 DE 102016114136
(43) Veröffentlichungstag der Anmeldung: 31.01.2018
(73) Patentinhaber: Deutsche Telekom AG, 53113 Bonn (DE)
(72) Erfinder: Brackmann, Ludwig, 53225 Bonn (DE); Kraus, Olaf, 53604 Bad Honnef (DE)
(74) Vertreter: Nern, Peter-Michael

(56) Entgegenhaltungen:
- US-A1- 2005 201 393
- US-A1- 2015 229 475

## Beschreibung

Die vorliegende Erfindung betrifft ein Verfahren zur Inbetriebnahme eines Heimnetzes mit gebäudeinterner Basisstation und gebäudeinternem Elektrogerät, insbesondere zum Pairing der gebäudeinternen Basisstation mit dem gebäudeinternen Elektrogerät, sowie eine entsprechend ausgeführte gebäudeinterne Basisstation. Insbesondere betrifft die Erfindung ein System und Verfahren zum cloudbasierten Auto-Pairing von Heimnetz-Basisstation (Home Base) und intelligenten Heimnetzgeräten (Smart Home Geräten).

Beim Anlernen von Smart Home Geräten im gebäudeinternen Heimnetzwerk über Pairing muss der Endkunde oder auch der Profi-Installateur heute pro einzelnem Smart Home Gerät, d.h. beispielsweise Sensor oder Aktor, z.B. für Fensterkontakte, jeweils die Zentrale (gebäudeinterne Basisstation oder Home Base) und jeweils das einzelne gebäudeinterne Elektrogerät (Smart Home Gerät) in den Anlernmodus versetzen. Erst in diesem Modus können dann die Netzwerkadressen einander zugeordnet werden.

Für den Endkunden ist dieser Prozess unbekannt und neu zu erlernen, fehleranfällig und zeitraubend. Für den professionellen Smart Home Installateur kostet der Prozess wertvolle Arbeitszeit und verteuert so die Smart Home Vor-Ort Installation. Falls zwei Nachbarn die Home Base zeitgleich im Anlernmodus betreiben kommt es regelmäßig zum Fehlanlernen, da Smart Home Geräte zufällig der falschen Home Base zugeordnet werden. Derartige Erfahrung beim Aufbauen von Trainingsarbeitsplätzen belegen dieses. Falls Home Bases zentral ab Lager an mehr als einem Arbeitsplatz in Funkreichweite gepairt werden sollen, tritt das letztgenannte Problem ebenfalls auf: Smart Home Geräte werden zufällig der falschen Home Base zugeordnet. Bei z. B. zehn derartigen Arbeitsplätzen in einem Raum ist mit erhöhter Fehleranfälligkeit zu rechnen.

Im Folgenden wird ein beispielhafter Smart Home Installationsprozess am Beispiel einer QIVICON Home Base beschrieben, wie er auf der Webseite "https://youtu.be/jGbyB2pKmW4" näher dokumentiert ist. Nach der Lieferung eines neuen Gerätes, das der Benutzer zu Hause in Betrieb nehmen möchte, z.B. eines Heizungsthermostats, muss der Nutzer in einem ersten Schritt das Gerät für die Inbetriebnahme im Heimnetz vorbereiten, beispielsweise den Batteriefachdeckel abziehen, in einem zweiten Schritt die Batterien einlegen, in einem dritten Schritt den Batteriefachdeckel wieder einsetzen und einrasten lassen. In einem vierten Schritt muss der Benutzer Datum und Uhrzeit per Stellrad einstellen und die gemachten Einstellungen jeweils per Tastendruck bestätigen. Während der Eingabe von Datum und Uhrzeit fährt der Motor. Eine Anzeige "InS" mit drehendem Zahnrad weist darauf hin, dass der Motor noch zurückfährt. Sobald nur "InS" im Display steht, ist das Gerät verbindungsbereit. Dann bereitet die Home Base die Verbindung vor. Danach erscheint auf dem Display "Geräte hinzufügen" und der Benutzer kann sein neues Gerät hinzufügen. Hierzu muss er in einem ersten Schritt den Verbindungsmodus aktivieren, beispielsweise durch Drücken der mittleren Taste für mindestens 3 Sekunden bis im Display ein Antennensymbol und die verbleibende Verbindungszeit in Sekunden erscheint. Nach erfolgreichem Verbinden erscheint kurz "AC" und das Display wechselt dann zur Anzeige "INS". Danach erscheint im Display ein Menu, mit welchem der Benutzer einen Raum auswählen kann, beispielsweise Esszimmer, Kinderzimmer, Waschkeller, Flur, Bad, Küche. Ferner kann der Benutzer der Steuerung einen Namen zuweisen, z.B. "Wohnzimmer Heizung". Es erscheinen weitere Hinweise im Display, die der Benutzer zur Installation beachten sollte, beispielsweise wie der alte Heizungsregler demontiert und der neue Heizungsregler montiert werden kann ohne dass Wasser ausläuft. Nach der Montage muss der Benutzer zweimal auf die mittlere Taste drücken, es erscheint sodann "AdA" im Display, das Gerät startet seine 1-2 minütige Justierfahrt. Ist diese beendet, wechselt das Display zur standardmäßigen Temperaturanzeige. Damit ist das Gerät eingerichtet und es kann wahlweise ein weiteres Gerät hinzugefügt werden.

Wie bereits oben angeführt, ist der hier beschriebene Einrichtungsprozess für ein neues Smart Home Gerät für den Endkunden unbekannt und neu zu erlernen, fehleranfällig und zeitraubend. Für den professionellen Smart Home Installateur kostet der Prozess wertvolle Arbeitszeit und verteuert so die Smart Home Vor-Ort Installation.

Die US 2015/229475 A1 beschreibt die mittels eines Konfigurationsgerätes assistierte Herstellung einer Kommunikationsbeziehung zwischen zwei Geräten, entweder durch die Authentifizierung eines Client-Geräts gegenüber einem Netzwerkgerät (Basisstation eines lokalen Netzwerkes) oder durch die gegenseitige von dem Konfigurationsgerät assistierte Authentifizierung zweier Client-Geräte untereinander. Zwischen dem Konfigurationsgerät und dem Netzwerkgerät bzw. zwischen dem Konfigurationsgerät einerseits und den beiden Client-Geräten andererseits besteht dabei eine Vertrauensbeziehung, so dass das Konfigurationsgerät als eine Vermittlungsinstanz fungiert, um zwei Geräte miteinander in Kontakt zu bringen. Hierfür nutzt das Konfigurationsgerät einen durch Scannen eines QR-Codes verfügbar gemachten öffentlichen Schlüssel des mit dem Netzwerkgerät in eine Kommunikationsbeziehung zu bringenden Client-Gerätes bzw. je einen von jedem der beiden in eine direkte Kommunikationsbeziehung miteinander zu bringenden Client-Geräte mit einer Funknachricht empfangenen öffentlichen Schlüssel.

Die US 2005/201393 A1 beschreibt ein System zum Einstellen eines drahtlosen LAN-Kommunikationsparameters in Bezug auf eine an ein Heimetzwerk gebundene Anwendung. Vor dem Kauf einer Anwendung registriert der Benutzer das Heimnetzwerk bei einem zentralen Server und erhält dann eine Benutzer-ID und eine E-Mail-Adresse. Kauft der Benutzer unter Angabe seiner Benutzer-ID eine Anwendung werden seine Benutzer-ID und ein Geräteschlüssel der Anwendung an den zentralen Server übertragen, welcher seinerseits die empfangenen Informationen an die mit der Benutzer-ID korrespondierende E-Mail-Adresse (Heimserver) überträgt. In einem Ad-hoc-Modus sucht der Heimserver die gekaufte Anwendung unter Verwendung des Geräteschlüssels. Stellt er dabei fest, dass die Anwendung sich bereits im Heimnetzwerk befindet, wird ein Kommunikationskanal aufgebaut sowie von dem Heimserver ein Benutzerschlüssel an die Anwendung übertragen.

Es ist die Aufgabe der vorliegenden Erfindung, ein Konzept zum Koppeln, insbesondere Pairing, einer gebäudeinternen Basisstation (Home Base) mit gebäudeinternen Elektrogeräten (Smart Home Geräten) im Heimnetzwerk zu schaffen, das für den Benutzer einfach handhabbar und wenig fehleranfällig ist.
Diese Aufgabe wird durch die Merkmale der unabhängigen Ansprüche gelöst. Vorteilhafte Weiterbildungsformen sind Gegenstand der abhängigen Ansprüche.

Schon an dieser Stelle sei betont, dass der Begriff der Gebäudeautomation bzw. Gebäudeautomatisierung und damit der Datenaufnahme und Datenübertragung innerhalb eines Gebäudes oder Gebäudekomplexes nicht nur die Steuerung von Funktionen innerhalb eines Gebäudes umfasst, sondern sich ganz allgemein auf die Steuerung beliebiger Funktionalitäten und auf die Auslese jeglicher Sensoren innerhalb eines Gebäudes oder Gebäudekomplexes erstreckt. Das umfasst beispielsweise auch den Betrieb von Alarmanlagen und die Registrierung, Weitergabe und Verarbeitung biologischer Parameter von im Gebäude befindlichen Personen, insbesondere im Rahmen von Health-Care bzw. Gesundheitsfürsorge, Krankenpflege und Altenbetreuung. Insbesondere umfasst die Gebäudeautomation auch Überwachungs-, Steuer-, Regel- und Optimierungseinrichtungen, bei denen alle Sensoren, Aktoren, Bedienelemente, Verbraucher und andere technische Einheiten miteinander vernetzt sind.

Die im Folgenden vorgestellten Verfahren und Systeme können zum Verknüpfen oder Koppeln einer gebäudeinternen Basisstation mit einem gebäudeinternen Elektrogerät verwendet werden. Das Verknüpfen oder Koppeln kann mittels eines Pairing-Prozesses bzw. über Pairing erfolgen. Der erste Verbindungsaufbau, bei dem Smart Home-Geräte gekoppelt werden, wird auch als Pairing bezeichnet. Dabei tauschen die KommunikationsPartner Kenndaten aus, so dass sie sich beim nächsten Mal automatisch wieder erkennen. Ein Smart Home-Gerät kann sichtbar oder unsichtbar für andere Smart Home-Geräte sein. Sichtbar bedeutet, dass es sich als Smart Home-Gerät zu erkennen gibt, wenn andere Smart Home-Geräte über Funk danach fragen. Unsichtbar heißt, dass es nicht auf Anfragen anderer Geräte reagiert. Pairing ist ursprünglich für Bluetooth-Geräte definiert, aber bezieht sich in dieser Beschreibung auf das paarweise Koppeln von elektrischen Geräten, insbesondere einer gebäudeinternen Basisstation mit einem gebäudeinternen Elektrogerät, beispielsweise einer Smart Home Basisstation mit einem Smart- Home Elektrogerät.

Eine gebäudeinterne Basisstation bzw. ein gebäudeinternes Elektrogerät bezeichnet dabei jede Kommunikationsentität, die auf einen geographisch begrenzten, d.h. lokalen geographisch Bereich konzentriert ist und üblicherweise die Vernetzung eines Hauses, eines Gebäudes bzw. Gebäudekomplexes oder eines Unternehmens bezeichnet. Es muss sich nicht zwingenderweise um ein einziges Gebäude handeln, es kann sich auch auf eine Ansammlung von Gebäuden beziehen, die beispielsweise unter dem Dach einer Firma oder einer Firmengruppe zusammengefasst sind. Auch muss es sich nicht zwangsläufig um eine Gebäude im strengen Sinne handeln, auch freie Plätze und sonstige Lokalitäten, die mit einem für sie verfügbaren Kommunikationsnetz ausgestattet sind, beispielsweise Open-Air Theateraufführungen, Public-Viewing, etc. sollen in dieser Anmeldung unter den Begriff des Gebäudes fallen.

Die Verknüpfung der gebäudeinternen Basisstation mit dem gebäudeinternen Elektrogerät kann dabei über ein gebäudeinternes Kommunikationsnetz erfolgen, beispielsweise über ein drahtloses Netzwerk, wie z.B. Zigbee, HomeMatic, HomeMatic IP, Bluetooth, WLAN, WiFi, Infrarot oder ein anderer Nahbereichskommunikationsstandard. Die Verknüpfung kann aber auch über ein drahtgebundenes Netzwerk erfolgen, beispielsweise über Ethernet, USB, Feldbus, Kabel, Glasfaser etc. Als Protokolle zur Datenübertragung über das gebäudeinterne Kommunikationsnetz können beispielsweise IPv4 oder IPv6 genutzt werden.

Die im Folgenden vorgestellten Verfahren und Systeme können zum Verknüpfen oder Koppeln einer gebäudeinternen Basisstation mit einem gebäudeinternen Elektrogerät verwendet werden und hierzu insbesondere das ZigBee Protokoll nutzen. ZigBee ist eine Spezifikation für drahtlose Funknetzwerke mit geringem Datenaufkommen, wie z.B. Hausautomation, Sensornetzwerke, Lichttechnik. Der Schwerpunkt von ZigBee liegt in kurzreichweitigen Netzwerken von etwa 10 bis 100 Meter. ZigBee baut auf dem IEEE 802.15.4 Standard auf und erweitert dessen Funktionalität insbesondere um die Möglichkeit des Routings und des sicheren Schlüsselaustausches. Die ZigBee-Spezifikation stellt drei verschiedene Gerätearten (ZigBee Devices) zur Verfügung, mit denen ein ZigBee Wireless Personal Area Network (WPAN) aufgebaut werden kann. Diese sind Endgerät, Router und Koordinator. Geräte wie zum Beispiel Steuerungs- oder Sensormodule, die meist mit Batterien betrieben werden, können als ZigBee-Endgeräte implementiert werden und benötigen nur einen Teil der Funktionen der ZigBee-Spezifikation. Sie nehmen nicht am Routing im Netzwerk teil und können in einen Schlafmodus gehen. Sie melden sich an einem Router ihrer Wahl an und treten so dem ZigBee-Netzwerk bei. Sie können ausschließlich mit dem Router kommunizieren, über den sie dem Netzwerk beigetreten sind. Werden Daten an ein solches Endgerät geschickt und dieses befindet sich im Schlafmodus, speichert der Router diese Pakete, bis das Endgerät sie abruft. ZigBee-Router nehmen am Routing der Pakete durch das Netzwerk teil. Sie benötigen einen größeren Funktionsumfang und damit auch etwas mehr Hardwareressourcen. Ein ZigBee-Koordinator startet das Netzwerk mit festgelegten Parametern. Nach dem Start übernimmt er dieselben Aufgaben wie ein ZigBee-Router.

Die im Folgenden vorgestellten Verfahren und Systeme können zum Verknüpfen oder Koppeln einer gebäudeinternen Basisstation mit einem gebäudeinternen Elektrogerät verwendet werden und hierzu insbesondere das HomeMatic Protokoll und/oder das HomeMatic IP Protokoll nutzen. Das HomeMatic-Protokoll ist ein Industriestandard für Anwendungen in der Haus-und Gebäudeautomation. Es bietet die folgenden Funktionen: Schalten und Dimmen von Licht und anderen elektrischen Verbrauchern, Heizen, Kühlen, Lüften, Wettermesstechnik, Energiemanagement, Zugangskontrolle, Schutz vor Einbruch, Gefahrenabsicherung gegen Rauch, Gas und Wasser. Das System besteht aus netz- und batteriebetriebenen Komponenten. HomeMatic basiert auf bidirektionaler Kommunikation, bei welcher der Empfänger die gesendeten Funksignale bestätigt. HomeMatic nutzt zum Verschlüsseln das AES-128-Verfahren. Das Protokoll ist speziell auf den Betrieb zwischen batteriebetriebenen Geräten ausgelegt: Der Stromverbrauch der Einzelkomponenten ist sehr gering, damit die Batterien möglichst lange halten. HomeMatic verfügt über Aktoren, die zeitgesteuerte Funktionen auch autonom ausführen können. So können Treppenlichtfunktionen oder Zeitfunktionen von Bewegungsmeldern in Dimmern und Schaltern konfiguriert werden.

Homematic IP bietet alle Vorteile eines modernen Smart Home Systems mit einfacher Konfiguration, umfangreichem Fernzugriff und sehr hoher Sicherheit. Das System bringt das Internetprotokoll IPv6 in jedes Gerät und liefert damit eine Lösung für das Internet der Dinge (loT - Internet of Things). Das Sortiment umfasst aktuell Produkte aus den Bereichen Sicherheit und Raumklima. Es werden ständig weitere Komponenten eingeführt, so dass man schrittweise ein umfangreiches Smart Home System aufbauen kann. Homematic IP wird intuitiv über eine Smartphone App eingerichtet und anschließend komfortabel über die App gesteuert. Die Konfiguration der Einzelgeräte übernimmt der Homematic IP Cloud Service. Dank der Funkkommunikation der Geräte lässt sich das Zuhause besonders leicht nachrüsten. Alle Produkte kommunizieren auf 868 MHz über das robuste und zuverlässige Homematic IP Funkprotokoll.

Die im Folgenden vorgestellten Verfahren und Systeme können zum Verknüpfen oder Koppeln einer gebäudeinternen Basisstation mit einem gebäudeinternen Elektrogerät verwendet werden und hierzu insbesondere die QIVICON Home Base als gebäudeinterne Basisstation nutzen. QIVICON ist ein proprietärer Standard, der mit Hilfe Smart Homeoptimierter Funkprotokolle die unterschiedlichsten Geräte und Apps im intelligenten Zuhause vernetzt. Von welchem Ort aus und mit welchem Gerät (PC, Tablet, Smartphone) per Internetverbindung auf QIVICON zugegriffen werden soll, ist in QIVICON flexibel geregelt. Die QIVICON Home Base nutzt einen intuitiven Einrichtungsassistenten, mit dem die Verbindung zu den kompatiblen Produkten hergestellt werden kann. Die Installation der dazugehörigen Apps auf Smartphone oder Tablet ist einfach realisierbar. QIVICON lässt sich über jeden handelsüblichen Router mit dem Internet verbinden. Die zentrale Steuereinheit des vernetzten Zuhauses ist über den Router per Internet mit Smartphone, PC oder Tablet sowie per Funk mit allen angeschlossenen QIVICON-kompatiblen Geräten verbunden.

Die im Folgenden vorgestellten Verfahren und Systeme können Konfigurationsserver umfassen, insbesondere Konfigurationsserver, die in einem gebäudeexternen Kommunikationsnetz angeordnet sind. Ein gebäudeexternes Kommunikationsnetz bezeichnet ein Netz, das nicht dem gebäudeinternen Kommunikationsnetz angehört. Es kann sich beispielsweise um ein öffentliches Netz handeln, wie z.B. das Internet, ein Telefonnetz eines Telefonbetreibers, z.B. ein drahtgebundenes Netz, wie beispielsweise ein POTS, ISDN, DSL oder Kabel-Netz oder ein drahtloses Netz, wie beispielsweise ein Mobilfunknetz eines Mobilfunkbetreibers, z.B. ein zelluläres Netz, beispielsweise unter Verwendung eines Mobilfunkstandards wie z.B. LTE, UMTS, GSM, etc. Als Protokolle zur Datenübertragung über das gebäudeexterne Kommunikationsnetz können IPv4 oder IPv6 genutzt werden oder ATM, STM oder andere Weitverkehrsstandards. Eine gebäudeexterne Kommunikationsentität bezeichnet eine Kommunikationseinheit, die dem gebäudeexternen Kommunikationsnetz angehört.

Der gebäudeexterne Konfigurationsserver kann in der Cloud vorgesehen sein. Unter Cloud bzw. Cloud Computing ist hier der Ansatz zu verstehen, abstrahierte IT-Infrastrukturen wie beispielsweise Rechenkapazität, Datenspeicher, Netzwerkkapazitäten, fertige Software oder hier den Server dynamisch an den Bedarf angepasst über ein Netzwerk zur Verfügung zu stellen. Die zur Verfügung gestellte abstrahierte IT-Infrastruktur wird auch als Cloud bzw. "Wolke" bezeichnet. Definierte technische Schnittstellen und Protokolle können Angebot und Nutzung dieser Dienstleistungen definieren.

Ein gebäudeinternes Elektrogerät beschreibt eine elektrische Komponente in einem gebäudeinternen Kommunikationsnetzwerk oder einem Gebäudeautomationsnetzwerk. Ein gebäudeinternes Elektrogerät kann Signale von der gebäudeinternen Basisstation und anderen Kommunikationsentitäten des gebäudeinternen Kommunikationsnetzwerks empfangen und/oder Signale an die gebäudeinterne Basisstation oder die anderen Kommunikationsentitäten des gebäudeinternen Kommunikationsnetzwerks senden. Ein gebäudeinternes Elektrogerät kann beispielsweise ein Aktor oder Sensor sein, z.B. ein Aktor oder Sensor, der über ein Modem, eine Netzwerkkarte, einen Netzwerkabschluss oder einen Netzwerkadapter verfügt. Es kann sich dabei beispielsweise um einen steuerbarer Aktor handeln, beispielsweise ein Stellglied für Heizung, Jalousien, Alarmanlage, Türschloss, Lichtschalter, Herd, Kühlschrank, Waschmaschine, Kaffeemaschine, Geschirrspülmaschine oder um einen steuerbaren Sensor, beispielsweise einen Temperaturfühler, einen Drucksensor, einen Lichtsensor, eine Lichtschranke, eine Uhr oder Armbanduhr oder eine Brille mit Sensorfunktion.
Ein gebäudeinternes Elektrogerät kann Hardware und/oder Software umfassen, um die technischen Funktionen zur gebäudeinternen Kommunikation bereitzustellen. Ein gebäudeinternes Elektrogerät kann Mikroprozessoren, Mikrochips, ASICs und/oder DSPs umfassen.

Die im Folgenden vorgestellten Verfahren und Systeme können von verschiedener Art sein. Die einzelnen beschriebenen Elemente können durch Hardware- und/oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Gemäß einem ersten Aspekt betrifft die Erfindung ein Verfahren zur Inbetriebnahme eines Heimnetzwerks mit einer gebäudeinternen Basisstation und zumindest einem gebäudeinternen Elektrogerät, mit folgenden Schritten: Übertragen einer Registrierungsanfrage von der gebäudeinternen Basisstation zu einem gebäudeexternen Konfigurationsserver, wobei die Registrierungsanfrage eine erste Geräteidentifikation der gebäudeinternen Basisstation umfasst; Verifizieren der ersten Geräteidentifikation durch den Konfigurationsserver basierend auf einem Vergleich mit einer vorgegebenen Liste von Geräteidentifikationen, wobei diese Liste von Geräteidentifikationen aus einem vorherigen Konfigurationsprozess hervorgeht; ansprechend auf eine positive Verifikation der ersten Geräteidentifikation: Übertragen einer Antwort auf die Registrierungsanfrage von dem Konfigurationsserver an die gebäudeinterne Basisstation, wobei die Antwort einen Netzwerkschlüssel für das Heimnetzwerk umfasst; und Übertragen des Netzwerkschlüssels durch die gebäudeinterne Basisstation an das zumindest eine gebäudeinterne Elektrogerät des Heimnetzwerks sowie Koppeln des zumindest einen gebäudeinternen Elektrogeräts mit der gebäudeinternen Basisstation des Heimnetzwerks unter Nutzung des Netzwerkschlüssels.

Bei dem angesprochenen vorherigen Konfigurationsprozess werden Benutzeridentifikationen der Liste mit zugehörigen Geräteidentifikationen von gebäudeinterner Basisstation und gebäudeinternen Elektrogeräten basierend auf einer Anmeldung der jeweiligen Benutzer erzeugt, indem Geräteidentifikationen der gebäudeinternen Basisstation und des zumindest einen gebäudeinternen Elektrogeräts mit einem Barcode-Lesegerät oder mit einem Smartphone eingelesen und durch Übertragen einer eine Benutzeridentifikation umfassenden Registrierungsanfrage eines Benutzers des Heimnetzwerks diesem Benutzer zugeordnet werden.

Dies hat den Vorteil, dass die Kopplung der gebäudeinternen Basisstation mit dem gebäudeinternen Elektrogerät sehr einfach handhabbar und wenig fehleranfällig ist, da keine Interaktion eines Benutzers dafür erforderlich ist. Beim Einschalten der Basisstation kann diese automatisch die Registrierungsanfrage starten, um den Netzwerkschlüssel zu erhalten, mit dem sie eine Kopplung bzw. ein Pairing mit dem gebäudeinternen Elektrogerät bewirken kann. Damit kann der Benutzer ganz aus dem Kopplungs- bzw. Pairing-Prozess herausgehalten werden, zumindest aus dem erstmaligen Pairing-Prozess. Dieser kann im Logistikzentrum zentral ausgeführt werden, ohne dass Interaktionen des Benutzers notwendig sind. Mit dem Netzwerkschlüssel kann im Heimnetzwerk verschlüsselt kommuniziert werden, was die Sicherheit des Heimnetzes erhöht. Es ist damit nicht möglich, unerlaubte Komponenten zu installieren, beispielsweise von einem nicht autorisierten Nutzer oder von einem Nachbarn, der sich in Funkreichweite befindet. Der Netzwerkschlüssel kann ein Schlüssel nach einem beliebigen kryptografischen Verfahren sein, beispielsweise ein AES-Schlüssel. Optional kann die Antwort auch eine Netzwerkadresse zur Zuweisung zu der gebäudeinternen Basisstation und weitere Netzwerkadressen zur Zuweisung zu dem oder den gebäudeinternen Elektrogerät(en) umfassen.

Wie bereits ausgeführt, umfasst die vorgegebene Liste von Geräteidentifikationen für Benutzeridentifikationen von Benutzern von Heimnetzwerken eine Zuordnung zu einer Geräteidentifikation einer gebäudeinternen Basisstation und einer Geräteidentifikation zumindest eines gebäudeinternen Elektrogeräts.

Dies hat den Vorteil, dass die Registrierung der gebäudeinternen Basisstation beim Konfigurationsserver unabhängig bzw. getrennt von einer Anmeldung des Benutzers des Heimnetzwerkes erfolgen kann. Somit ist eine Interaktion des Benutzers nur beim Anmeldeprozess, beispielsweise beim Einkaufen der Geräte erforderlich, während beim erstmaligen Registrierungsprozess der gebäudeinternen Basisstation keine Benutzerinteraktionen erforderlich sind. Damit kann die Inbetriebnahme des Heimnetzes automatisiert und weniger fehleranfällig erfolgen.

Wie weiterhin ausgeführt, geht die vorgegebene Liste von Geräteidentifikationen aus einem vorherigen Konfigurationsprozess hervor, welcher Benutzeridentifikationen der Liste mit zugehörigen Geräteidentifikationen von gebäudeinterner Basisstation und gebäudeinternen Elektrogeräten basierend auf einer Anmeldung der jeweiligen Benutzer erzeugt.

Dies hat den Vorteil, dass die gebäudeinterne Basisstation und die zugehörigen gebäudeinternen Elektrogeräte des Heimnetzes bereits vorkonfiguriert werden können, bevor sie zum ersten Mal in Betrieb genommen werden. Die Vorkonfiguration erleichtert die automatische Inbetriebnahme im Heimnetzwerk des Benutzers.

Das Einlesen der Geräteidentifikationen von gebäudeinterner Basisstation und gebäudeinternen Elektrogeräten mit einem Barcode-Lesegerät oder mit einem Smartphone hat den Vorteil, dass die Geräteidentifikationen auf einfache Weise per Smartphone oder Barcode-Lesegerät erfasst werden können, falls sie nicht bereits während des Einkaufs in der Liste von Geräte-IDs konfiguriert wurden.

Das Übertragen einer Registrierungsanfrage eines Benutzers des Heimnetzwerks mit einer Benutzeridentifikation des Benutzers hat den Vorteil, dass mit der Benutzer-ID die Geräte-IDs von gebäudeinterner Basisstation und gebäudeinternen Elektrogeräten personalisiert, d.h. dem Benutzer des Heimnetzes zugeordnet werden können. Dem Benutzer kann dann über die Benutzer-ID eine Lizenz zugeordnet werden. Die Registrierung der gebäudeinternen Basisstation kann beispielsweise nur dann ausgeführt werden, wenn die entsprechende Lizenz vorhanden ist.

Gemäß einer Ausführungsform des Verfahrens umfasst das Übertragen der Registrierungsanfrage des Benutzers ein Aufrufen eines persönlichen Registrierungslink des Benutzers.

Dies hat den Vorteil, dass der Benutzer des Heimnetzwerkes sich bereits vor der Inbetriebnahme des Heimnetzwerkes über den persönlichen Registrierungslink anmelden kann, um eine Vorkonfiguration der Komponenten des Heimnetzwerkes vorzunehmen, damit diese sich bei der Inbetriebnahme des Heimnetzwerkes automatisch konfigurieren.

Gemäß einer Ausführungsform des Verfahrens umfasst das Koppeln des zumindest einen gebäudeinternen Elektrogeräts des Heimnetzwerks mit der gebäudeinternen Basisstation des Heimnetzwerks ein Pairing.

Dies hat den Vorteil, dass über das Pairing beim ersten Verbindungsaufbau zwischen gebäudeinterner Basisstation und gebäudeinternem Elektrogerät Kenndaten ausgetauscht werden, so dass sie sich beim nächsten Mal automatisch wieder erkennen.

Gemäß einer Ausführungsform des Verfahrens umfasst der Konfigurationsprozess ferner folgendes: Zuordnen von Raumnamen des Heimnetzwerks zu den Geräteidentifikationen von gebäudeinterner Basisstation und gebäudeinternen Elektrogeräten.

Dies hat den Vorteil, dass der Benutzer mehrere gleichartige gebäudeinterne Elektrogeräte, z.B. Fenstersicherungen, den Räumen des Gebäudes zuordnen kann, in dem das Heimnetzwerk betrieben wird. Dies ist insbesondere bei größeren Gebäuden oder bei einer Vielzahl gleichartiger Sensoren/Aktoren im Gebäude sinnvoll.

Gemäß einer Ausführungsform des Verfahrens umfasst die vorgegebene Liste von Geräteidentifikationen für jede Geräteidentifikation einen Lizenzcode zur Nutzung des zumindest einen zugeordneten gebäudeinternen Elektrogeräts und der zugeordneten gebäudeinternen Basisstation.

Dies hat den Vorteil, dass die Inbetriebnahme der Komponenten des Heimnetzwerks nur nach erfolgtem Erwerb einer Lizenz erfolgen kann.

Gemäß einem zweiten Aspekt betrifft die Erfindung eine gebäudeinterne Basisstation zur Inbetriebnahme in einem Heimnetzwerk mit einer gebäudeinternen Basisstation und zumindest einem gebäudeinternen Elektrogerät, umfassend: eine erste Kommunikationsschnittstelle zur Kommunikation mit einem gebäudeexternen Konfigurationsserver, eine zweite Kommunikationsschnittstelle zur Kommunikation mit dem zumindest einen gebäudeinternen Elektrogerät und einen Prozessor, welcher auch durch die erste Kommunikationsschnittstelle und/oder die zweite Kommunikationsschnittstelle realisiert sein kann. Die erste Kommunikationsschnittstelle ist ausgebildet, aufgrund von Steuerbefehlen des Prozessors, eine Registrierungsanfrage zu dem gebäudeexternen Konfigurationsserver zu übertragen, wobei die Registrierungsanfrage eine erste Geräteidentifikation der gebäudeinternen Basisstation umfasst, wobei die erste Kommunikationsschnittstelle ferner ausgebildet ist, eine Antwort auf die Registrierungsanfrage von dem Konfigurationsserver zu empfangen, wobei die Antwort einen Netzwerkschlüssel für das Heimnetzwerk umfasst. Die zweite Kommunikationsschnittstelle ist dazu ausgebildet, aufgrund von Steuerbefehlen des Prozessors, den empfangenen Netzwerkschlüssel an das zumindest eine gebäudeinterne Elektrogerät zu übertragen und das zumindest eine gebäudeinterne Elektrogerät mit der gebäudeinternen Basisstation unter Nutzung des Netzwerkschlüssels zu koppeln.

Dies hat den Vorteil, dass die Kopplung der gebäudeinternen Basisstation mit dem gebäudeinternen Elektrogerät sehr einfach handhabbar und wenig fehleranfällig ist, da keine Interaktion eines Benutzers dafür erforderlich ist. Beim Einschalten der Basisstation kann diese automatisch die Registrierungsanfrage starten, um den entsprechenden Netzwerkschlüssel zu erhalten, mit dem sie eine Kopplung bzw. ein Pairing mit dem gebäudeinternen Elektrogerät bewirken kann. Damit kann der Benutzer ganz aus dem Kopplungs- bzw. Pairing-Prozess herausgehalten werden, zumindest aus dem erstmaligen Pairing-Prozess. Dieser kann im Logistikzentrum zentral ausgeführt werden, ohne dass Interaktionen des Benutzers notwendig sind. Der Netzwerkschlüssel garantiert die notwendige Sicherheit bei der Installation des Heimnetzwerks gegen unerlaubtes Installieren von Komponenten. Optional kann die Antwort auch eine Netzwerkadresse zur Zuweisung zu der gebäudeinternen Basisstation und weitere Netzwerkadressen zur Zuweisung zu dem oder den gebäudeinternen Elektrogerät(en) umfassen.

Gemäß einer Ausführungsform der gebäudeinternen Basisstation ist die zweite Kommunikationsschnittstelle ausgebildet, einen Pairing-Prozess zum Koppeln des zumindest einen gebäudeinternen Elektrogeräts mit der gebäudeinternen Basisstation zu initiieren.

Dies hat den Vorteil, dass über das Pairing beim ersten Verbindungsaufbau zwischen gebäudeinterner Basisstation und gebäudeinternem Elektrogerät Kenndaten ausgetauscht werden, so dass sie sich beim nächsten Mal automatisch wieder erkennen.

Gemäß einer Ausführungsform der gebäudeinternen Basisstation ist die zweite Kommunikationsschnittstelle ausgebildet, eine Anfrage des zumindest einen gebäudeinternen Elektrogeräts nach einem Netzwerkschlüssel zu empfangen, wobei die Anfrage eine Geräteidentifikation des gebäudeinternen Elektrogeräts umfasst.

Dies hat den Vorteil, dass sich das gebäudeinterne Elektrogerät beim Einschalten automatisch konfiguriert und von der gebäudeinternen Basisstation mit dem Netzwerkschlüssel versorgt wird, welchen diese aus dem Registrierungsprozess von dem Konfigurationsserver erhalten hat. Auch hier ist keine Nutzerinteraktion erforderlich.

Gemäß einer Ausführungsform der gebäudeinternen Basisstation umfasst die gebäudeinterne Basisstation eine Konfigurationsschnittstelle und die zweite Kommunikationsschnittstelle ist ausgebildet, bei Aktivierung der Konfigurationsschnittstelle die Antwort mit dem Netzwerkschlüssel an das gebäudeinterne Elektrogerät zu übertragen.

Dies hat den Vorteil, dass auch gebäudeinterne Elektrogeräte mit einem Netzwerkschlüssel versorgt werden können, deren Geräte-ID sich noch nicht in der Liste von Geräte-IDs befindet, z.B. weil sie erst nach dem Konfigurationsprozess neu gekauft bzw. in Betrieb genommen wurden.

Gemäß einer Ausführungsform der gebäudeinternen Basisstation umfasst die Konfigurationsschnittstelle einen manuell betätigbaren Aktivierungsschalter.

Dies hat den Vorteil, dass die gebäudeinterne Basisstation sich, falls notwendig, auch manuell, d.h. über eine Benutzerinteraktion, konfigurieren lässt.

Weitere Ausführungsbeispiele werden Bezug nehmend auf die beiliegenden Zeichnungen erläutert. Es zeigen:
Fig. 1 eine schematische Darstellung eines Gebäudeautomatisierungssystems 100 mit gebäudeinterner Basisstation 110 gemäß einer ersten Ausführungsform;
Fig. 2 eine schematische Darstellung eines Verfahrens 200 zur Inbetriebnahme eines Heimnetzwerks mit einer gebäudeinternen Basisstation 110 und einem gebäudeinternen Elektrogerät 120 gemäß einer Ausführungsform;
Fig. 3 eine schematische Darstellung eines Gebäudeautomatisierungssystems 300 mit gebäudeinterner Basisstation 110 gemäß einer weiteren Ausführungsform;
Fig. 4 eine schematische Darstellung eines Gebäudeautomatisierungssystems 400 mit gebäudeinterner Basisstation 110 gemäß einer weiteren Ausführungsform; und
Fig. 5 eine schematische Darstellung eines Gebäudeautomatisierungssystems 500 gemäß einer weiteren Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

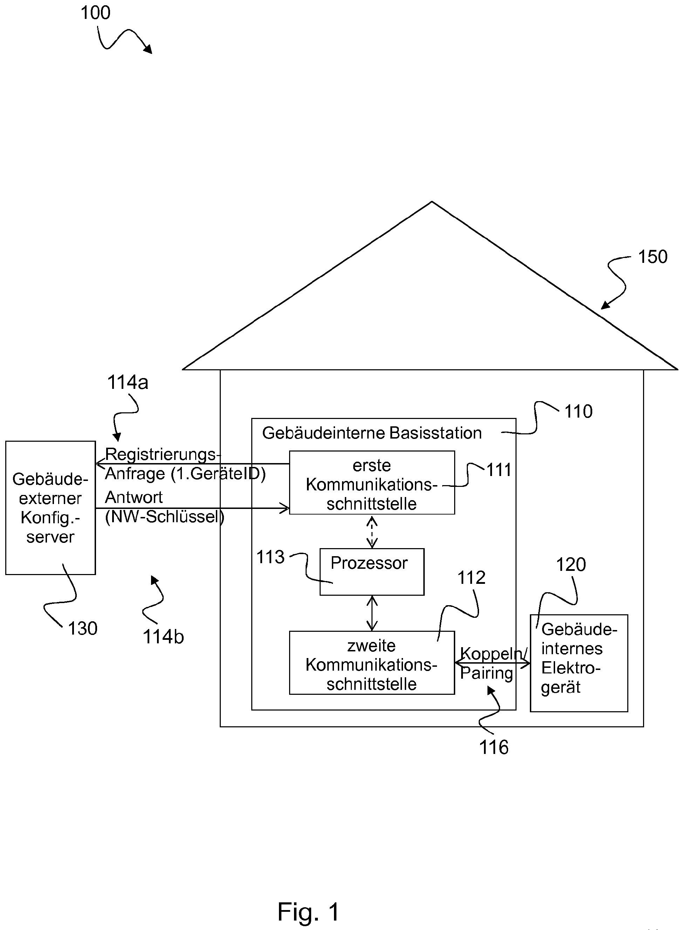

Fig. 1 zeigt eine schematische Darstellung eines Gebäudeautomatisierungssystems 100 mit gebäudeinterner Basisstation 110 gemäß einer ersten Ausführungsform. Das Gebäudeautomatisierungssystem 100 umfasst ein Heimnetzwerk 150 bzw. Gebäudenetzwerk mit einer gebäudeinternen Basisstation 110 und einem oder mehreren gebäudeinternen Elektrogeräten 120, von denen in Figur 1 der Einfachheit halber nur eines gezeigt ist. Das Gebäudeautomatisierungssystem 100 umfasst ferner einen gebäudeexternen Konfigurationsserver 130 zur Konfiguration des Heimnetzwerks 150.

Die gebäudeinterne Basisstation 110 dient der Inbetriebnahme des Heimnetzwerks 150 mit der gebäudeinternen Basisstation 110 und zumindest einem gebäudeinternen Elektrogerät 120. Die gebäudeinterne Basisstation 110 umfasst eine erste Kommunikationsschnittstelle 111, eine zweite Kommunikationsschnittstelle 112 und einen Prozessor 113. Der Prozessor 113 kann auch durch die erste 111 und/oder zweite 112 Kommunikationsschnittstelle realisiert sein.

Die erste Kommunikationsschnittstelle 111 dient zur Kommunikation mit dem gebäudeexternen Konfigurationsserver 130. Die erste Kommunikationsschnittstelle 111 überträgt eine Registrierungsanfrage 114a zu dem gebäudeexternen Konfigurationsserver 130. Die Registrierungsanfrage 114a umfasst eine erste Geräteidentifikation der gebäudeinternen Basisstation 110. Die erste Kommunikationsschnittstelle 111 empfängt eine Antwort 114b auf die Registrierungsanfrage 114a von dem Konfigurationsserver 130. Die Antwort 114b umfasst einen Netzwerkschlüssel für das Heimnetzwerk. Optional kann die Antwort 114b auch eine erste Netzwerkadresse zur Zuweisung zu der gebäudeinternen Basisstation 110 des Heimnetzwerks 150 und eine weitere Netzwerkadresse zur Zuweisung zu dem zumindest einen gebäudeinternen Elektrogerät 120 des Heimnetzwerks 150 umfassen.

Die zweite Kommunikationsschnittstelle 112 dient zur Kommunikation mit dem gebäudeinternen Elektrogerät 120. Die zweite Kommunikationsschnittstelle 112 überträgt den empfangenen Netzwerkschlüssel an das gebäudeinterne Elektrogerät 120. Die zweite Kommunikationsschnittstelle 112 koppelt dann das gebäudeinterne Elektrogerät 120 mit der gebäudeinternen Basisstation 110 unter Nutzung des Netzwerkschlüssels.

Die zweite Kommunikationsschnittstelle 112 kann insbesondere einen Pairing-Prozess zum Koppeln 116 des gebäudeinternen Elektrogeräts 120 mit der gebäudeinternen Basisstation 110 initiieren.

Die zweite Kommunikationsschnittstelle 112 kann eine Anfrage des gebäudeinternen Elektrogeräts 120 nach einem Netzwerkschlüssel empfangen, welche eine Geräteidentifikation des gebäudeinternen Elektrogeräts 120 anzeigt.

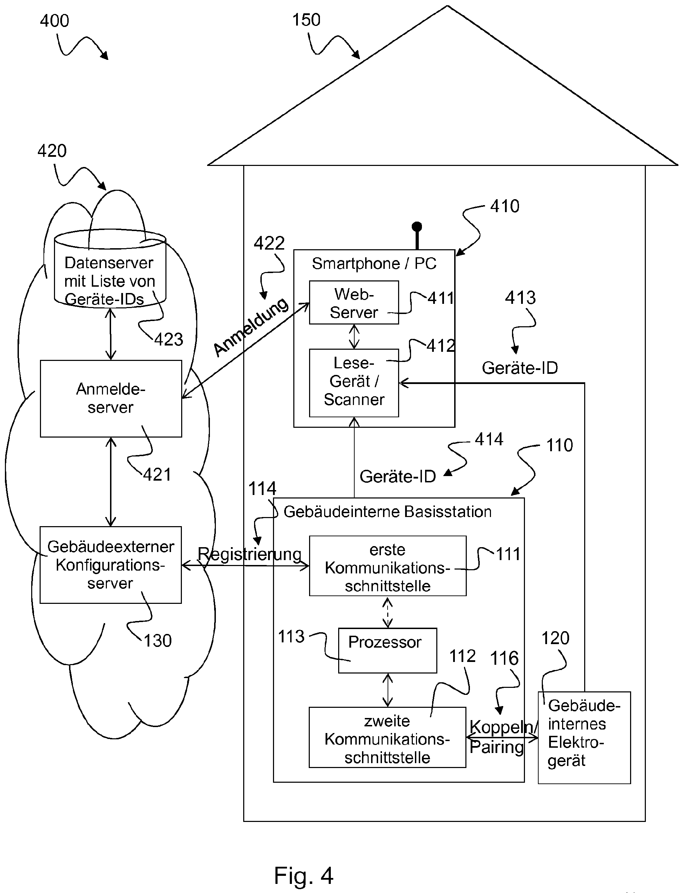

Die zweite Kommunikationsschnittstelle 112 kann die empfangene Geräteidentifikation des gebäudeinternen Elektrogeräts 120 basierend auf einem Vergleich mit einer vorgegebenen Liste von Geräteidentifikationen verifizieren, beispielsweise einer Liste 423 von Geräteidentifikationen, wie in Figur 4 näher beschrieben.

Die zweite Kommunikationsschnittstelle 112 kann bei positiver Verifikation ansprechend auf die Anfrage 114a des gebäudeinternen Elektrogeräts 120 eine Antwort 114b mit dem Netzwerkschlüssel an das gebäudeinterne Elektrogerät 120 übertragen. In oder mit dieser Antwort 114a können optional auch Netzwerkadressen für das Heimnetzwerk übertragen werden.

Die gebäudeinterne Basisstation 110 kann ferner eine (nicht dargestellte) Konfigurationsschnittstelle umfassen. Die zweite Kommunikationsschnittstelle 112 kann bei Aktivierung der Konfigurationsschnittstelle die Antwort mit dem Netzwerkschlüssel an das gebäudeinterne Elektrogerät 120 übertragen. Die Konfigurationsschnittstelle kann beispielsweise einen manuell betätigbaren Aktivierungsschalter umfassen, mit der ein Nutzer die Konfigurationsschnittstelle aktivieren kann.

Ein übergeordnetes Ziel der Erfindung ist es dabei, in einem ersten Schritt eine Liste der neu anzulernenden Geräte (Smart Home Geräte/ Home Base) mit sehr wenig Aufwand zu erfassen und in einem zweiten Schritt der Home Base aus der Cloud heraus eine Liste der neu zu lernenden Smart Home Geräte (z.B. Sensoren, Aktoren) bereitzustellen, um so den Pairing Prozess stark zu vereinfachen oder vollständig zu automatisieren.

In dem ersten Schritt, der beispielsweise durch den oben beschriebenen Konfigurationsprozess realisiert werden kann, werden die Geräte-IDs erfasst. So kann im Rahmen von vorhandenen Endkundenprozessen zusätzlich zum kaufmännischen Barcode der (vorhandene) Barcode mit der eindeutigen Produkt ID des Smart Home Geräts (d.h. gebäudeinternen Elektrogeräts und gebäudeinterner Basisstation) erfasst werden. Erfindungsgemäß können dabei mehrere Geräte IDs einem Endnutzer-Konto zugeordnet werden. Dem Endnutzer-Konto ist beispielsweise ein Lizenzcode für die Smart Home Applikation zugeordnet, über den er die Mehrzahl von Geräte-IDs einbinden kann. D.h. während des Einkaufsprozesses (beispielsweise im Ladengeschäft oder Online-Shop) können die Geräte IDs der Smart Home Geräte (gebäudeinterne Elektrogeräte) und die Geräte ID der Home Base (gebäudeinterne Basisstation) gesammelt und dem Endkunden zugeordnet werden. Auf dieser Basis kann das Hausnetzwerk vorkonfiguriert werden.

In dem zweiten Schritt, der beispielsweise durch die oben beschriebene Registrierung beim gebäudeexternen Konfigurationsserver realisiert werden kann, meldet sich die Home Base (gebäudeinterne Basisstation) beim zentralen Konfigurationsserver (beispielsweise in der Cloud) an. Der Benutzer kann seinen persönlichen Registrierungslink mit seiner Endnutzer-Konto ID nutzen und sich beim gebäudeexternen Konfigurationsserver bzw. in der Cloud identifizieren. Dadurch kann der gebäudeexterne Konfigurationsserver bzw. die Cloud folgende Dinge umsetzen: Eine sich zur Neuinstallation meldende Home Base kann genau einem Endnutzer zugeordnet werden. Der obigen Home Base können die (durch den Endkunden gekauften) Endgeräte zugeordnet werden und auf Netzwerkebene die entsprechenden Adressen vergeben werden. Die Smart Home Endgeräte können zusätzlich zu den heutigen Installationsroutinen einen Auto-Konfigurations-Mode mit folgenden Eigenschaften enthalten: Nach dem erstmaligen Aktivieren der Stromversorgung und solange sie keine Netzwerkadressen erhalten haben können sie zeitweise (ggf. mit veränderlichem Abstand) in den Konfigurations-Modus wechseln und somit für den obigen Prozess bereitstehen (u.a. zum Empfang der individuellen Netzwerkadressen). Alternativ kann der Konfigurations-Modus manuell angestoßen werden.

Aus Sicht der Home Base geschieht folgendes, sobald eine unbekannte Geräte ID empfangen wird: Falls die Geräte ID Bestandteil der Kundenliste ist, wird das Gerät dem Hausnetz hinzugefügt und erhält eine Netzwerkadresse. Falls die Geräte ID nicht Bestandteil der Kundenliste ist und der Konfigurationsschalter am Gerät nicht gedrückt wurde, gehört das Gerät vermutlich einem Nachbarn und wird nicht ins Hausnetz aufgenommen. Falls die Geräte-ID nicht Bestandteil der Kundenliste ist und der Konfigurationsschalter am Gerät gedrückt wurde, wird das Gerät dem Hausnetz hinzugefügt und erhält eine Netzwerkadresse.

Für den Endnutzer oder Installateur entfallen somit alle Schritte, die zum Aufbau des Hausnetzwerks, insbesondere der individuellen Adressvergabe zählen. Dem Endkunden verbleibt nur noch die Aufgabe, die im Netzwerk bekannten Geräte namentlich einem Raum zuzuordnen. Optional kann der Endkunde bzw. Endnutzer bzw. Installations-Vorbereiter im Rahmen des Kaufprozesses bzw. Pack-Prozesses zusätzlich Raumnamen vergeben, so dass diese ebenfalls Bestandteil der Konfiguration sind. In diesem Fall kann der Rolle Installateur eine Liste "Geräte ID - Raumname" zugeführt werden.

In weiteren Ausprägungen kann das Erfassen der Geräte IDs der Smart Home Geräte ergänzend per Smartphone (in der Smart Home App) durch den Endnutzer oder Installateur und/oder per Barcode Reader durch den Installateur erfolgen.

In einer Ausführungsform kann der Netzwerkschlüssel vorprogrammiert sein, beispielsweise kann die Vorprogrammierung während des Logistikprozesses beim Einkauf oder nach dem Einkauf der Geräte erfolgen.

In einer Ausführungsform kann die Inbetriebnahme der Geräte nacheinander erfolgen. Um Zeit zu sparen ist auch eine parallele Inbetriebnahme der Geräte möglich, beispielsweise dann, wenn eine sehr große Zahl an Geräten in Betrieb zu nehmen ist. Dann ist jedoch darauf zu achten, dass die einzelnen Geräte in einem entsprechenden Abstand zueinander angeordnet sind, damit es bei der Funkübertragung zur Inbetriebnahme eines ersten Geräts nicht zu Störungen bei der Funkübertragung zur Inbetriebnahme eines zweiten Geräts kommt. Beispielsweise kann die Funkübertragung zur Inbetriebnahme der Geräte in einem abgeschirmten Raum erfolgen. Alternativ kann die Inbetriebnahme auch per Kabel erfolgen.

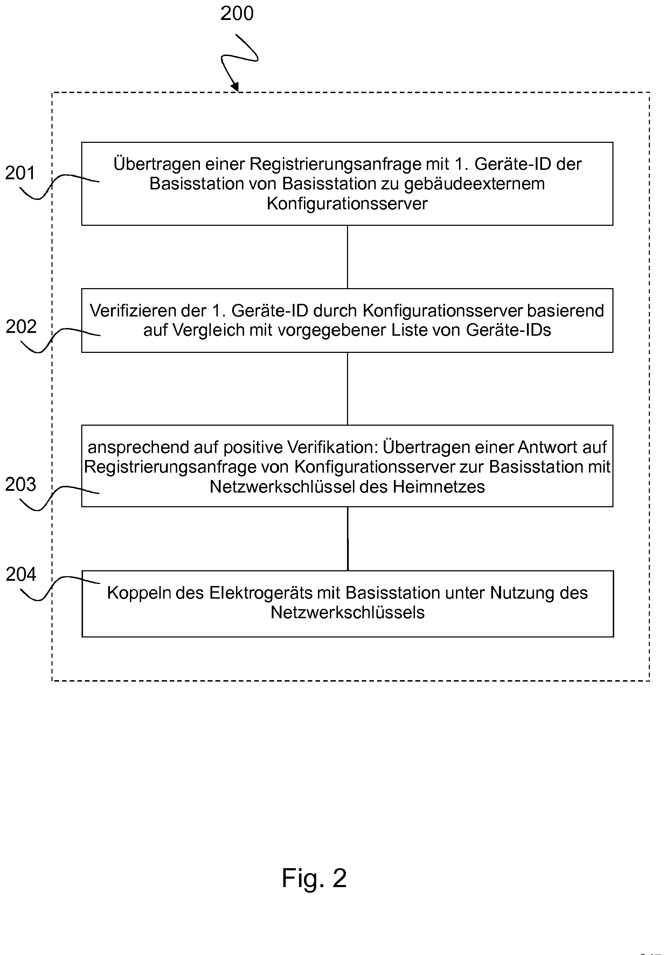

Fig. 2 zeigt eine schematische Darstellung eines Verfahrens 200 zur Inbetriebnahme eines Heimnetzwerks mit einer gebäudeinternen Basisstation 110 und einem gebäudeinternen Elektrogerät 120 gemäß einer Ausführungsform.

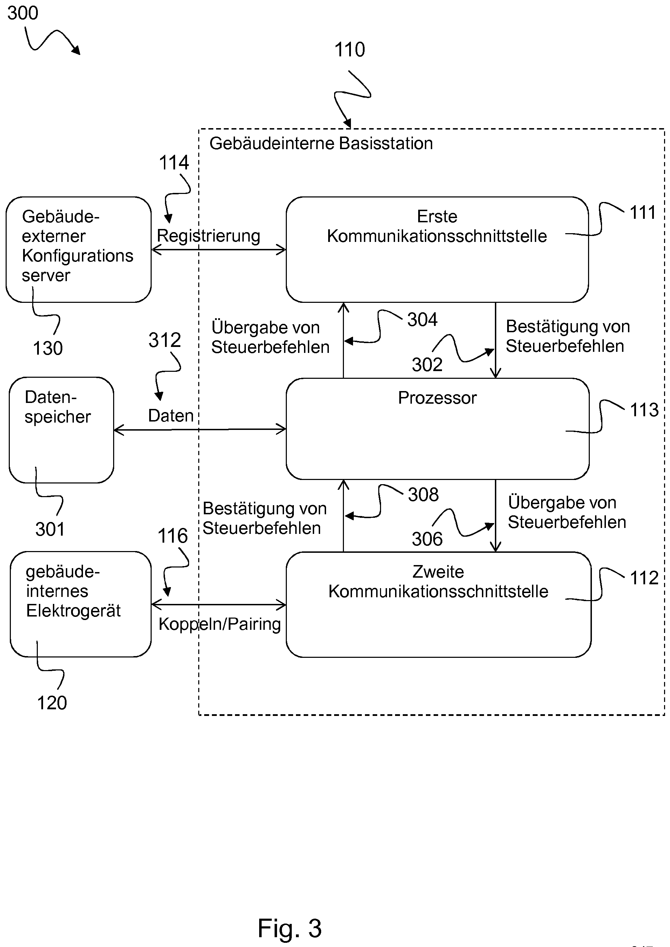

Das Verfahren 200 umfasst die im Folgenden dargestellten vier Schritte: Ein erster Schritt 201 umfasst das Übertragen einer Registrierungsanfrage 114a von der gebäudeinternen Basisstation 110 zu einem gebäudeexternen Konfigurationsserver 130, wobei die Registrierungsanfrage 114a eine erste Geräteidentifikation der gebäudeinternen Basisstation 110 umfasst. Die Registrierungsanfrage 114a, die gebäudeinterne Basisstation 110 und der gebäudeexterne Konfigurationsserver 130 können so ausgeführt sein, wie oben zu Figur 1 oder unten zu den Figuren 3 und 4 beschrieben.

Ein zweiter Schritt 202 umfasst das Verifizieren der ersten Geräteidentifikation durch den Konfigurationsserver 130 basierend auf einem Vergleich mit einer vorgegebenen Liste 423 von Geräteidentifikationen. Die vorgegebene Liste 423 von Geräteidentifikationen kann so ausgeführt sein, wie unten zu Figur 4 beschrieben.

Ein dritter Schritt 203 umfasst ansprechend auf eine positive Verifikation der ersten Geräteidentifikation: das Übertragen einer Antwort 114b auf die Registrierungsanfrage 114a von dem Konfigurationsserver 130 an die gebäudeinterne Basisstation 110, wobei die Antwort 114b einen Netzwerkschlüssel des Heimnetzwerks umfasst. Die Registrierungsanfrage 114a, die Antwort 114b, die gebäudeinterne Basisstation 110 und der gebäudeexterne Konfigurationsserver 130 können so ausgeführt sein, wie oben zu Figur 1 oder unten zu den Figuren 3 und 4 beschrieben.

Ein vierter Schritt 204 umfasst das Koppeln 116 des zumindest einen gebäudeinternen Elektrogeräts 120 des Heimnetzwerks 150 mit der gebäudeinternen Basisstation 110 des Heimnetzwerks 150 unter Nutzung des Netzwerkschlüssels.

Das Koppeln 204, 116 des zumindest einen gebäudeinternen Elektrogeräts 120 des Heimnetzwerks 150 mit der gebäudeinternen Basisstation 110 des Heimnetzwerks 150 kann ein Pairing bzw. einen Pairing-Prozess umfassen.

Die vorgegebene Liste 423 von Geräteidentifikationen für Benutzeridentifikationen von Benutzern von Heimnetzwerken 150 kann eine Zuordnung zu einer Geräteidentifikation einer gebäudeinternen Basisstation 110 und einer Geräteidentifikation zumindest eines gebäudeinternen Elektrogeräts 120 sowie einen zugehörigen Netzwerkschlüssel umfassen.

Die vorgegebene Liste 423 von Geräteidentifikationen kann aus einem vorherigen Konfigurationsprozess 422 hervorgehen, welcher Benutzeridentifikationen der Liste 423 mit zugehörigen Geräteidentifikationen von gebäudeinterner Basisstation 110 und gebäudeinternen Elektrogeräten 120 basierend auf einer Anmeldung 422 der jeweiligen Benutzer erzeugt. Die Anmeldung kann beispielsweise bei einem Einkauf des Benutzers einer gebäudeinternen Basisstation und zugehörigen elektrischen Komponenten, d.h. gebäudeinternen Elektrogeräten erfolgen, beispielsweise in einem Online-Shop.

Der Konfigurationsprozess kann ein Einlesen der Geräteidentifikationen von gebäudeinterner Basisstation 110 und gebäudeinternen Elektrogeräten 120 mit einem Barcode-Lesegerät oder mit einem Smartphone 410 umfassen.

Der Konfigurationsprozess ferner ein Zuordnen von Raumnamen des Heimnetzwerks 150 zu den Geräteidentifikationen von gebäudeinterner Basisstation 110 und gebäudeinternen Elektrogeräten 120 umfassen.

Die Anmeldung 422 eines Benutzers kann das Übertragen einer Registrierungsanfrage des Benutzers des Heimnetzwerks 150 umfassen. Die Registrierungsanfrage kann dabei eine Benutzeridentifikation des Benutzers umfassen.

Das Übertragen der Registrierungsanfrage des Benutzers kann beispielsweise ein Aufrufen eines persönlichen Registrierungslink des Benutzers umfassen.

Die vorgegebene Liste 423 von Geräteidentifikationen kann für jede Geräteidentifikation einen Lizenzcode zur Nutzung des zumindest einen zugeordneten gebäudeinternen Elektrogeräts 120 und der zugeordneten gebäudeinternen Basisstation 110 umfassen.

Fig. 3 zeigt eine schematische Darstellung eines Gebäudeautomatisierungssystems 300 mit gebäudeinterner Basisstation 110 gemäß einer weiteren Ausführungsform. Die gebäudeinterne Basisstation 110 ist eine Ausführungsform der in Figur 1 beschriebenen gebäudeinternen Basisstation 110.

Die gebäudeinterne Basisstation 110 umfasst eine erste Kommunikationsschnittstelle 111, eine zweite Kommunikationsschnittstelle 112 und einen Prozessor 113. Die erste Kommunikationsschnittstelle 111 dient zur Kommunikation mit dem gebäudeexternen Konfigurationsserver 130, um die gebäudeinterne Basisstation über eine Registrierungsprozedur 114 zusammen mit dem zumindest einen gebäudeinternen Elektrogerät 120 beim gebäudeexternen Konfigurationsserver 130 zu registrieren. Die zweite Kommunikationsschnittstelle 112 dient zur Kommunikation mit dem gebäudeinternen Elektrogerät 120 und zur Zuweisung eines Netzwerkschlüssels an das gebäudeinterne Elektrogerät 120.

Bei der Inbetriebnahme der gebäudeinternen Basisstation 110 prüft diese über eine im Prozessor 113 implementierte Steuerung, ob ihr bereits ein Netzwerkschlüssel des Heimnetzwerks zur Verfügung steht. Falls nicht, wird durch den Prozessor 113 ein Registrierungsvorgang 114 initiiert. Dazu überträgt der Prozessor 113 Steuerbefehle 304 an die erste Kommunikationsschnittstelle 111, um mit der ersten Kommunikationsschnittstelle 111 eine Registrierungsanfrage 114a zu dem gebäudeexternen Konfigurationsserver 130 zu übertragen. Die Registrierungsanfrage 114a umfasst eine erste Geräteidentifikation der gebäudeinternen Basisstation 110. Der gebäudeexterne Konfigurationsserver 130 verarbeitet die Registrierungsanfrage 114a und sendet eine Antwort 114b auf diese Registrierungsanfrage 114a an die erste Kommunikationsschnittstelle 111, welche diese Antwort über Bestätigung 302 auf die Steuerbefehle 304 an den Prozessor 113 weiterleitet. Die Antwort 114b umfasst einen Netzwerkschlüssel des Heimnetzwerks. Optional kann die Antwort 114b auch eine erste Netzwerkadresse zur Zuweisung zu der gebäudeinternen Basisstation 110 sowie eine oder mehrere weitere Netzwerkadresse zur Zuweisung zu dem zumindest einen gebäudeinternen Elektrogerät 120 umfassen.

Der Prozessor übergibt den Netzwerkschlüssel des Heimnetzwerks mittels Steuerbefehlen 306 an die zweite Kommunikationsschnittstelle 112, welche diesen Netzwerkschlüssel an das gebäudeinterne Elektrogerät 120 bzw. die weiteren gebäudeinternen Elektrogeräte zur Kommunikation mit der gebäudeinternen Basisstation 110 überträgt. Die Übergabe des Netzwerkschlüssels des Heimnetzwerks an das gebäudeinterne Elektrogerät wird dem Prozessor 113 von der zweiten Kommunikationsschnittstelle 112 mittels Steuerbefehlen 308 bestätigt.

Der Prozessor kann auf einen Datenspeicher 301 zugreifen, um die Daten 312, beispielsweise den Netzwerkschlüssel oder optional die empfangenen Netzwerkadressen zur Zuweisung zur gebäudeinternen Basisstation und den gebäudeinternen Elektrogeräten 120 und/oder die Steuersequenz für den Registrierungsvorgang 114 dort abzulegen.

Nachdem sowohl gebäudeinterne Basisstation 110 als auch gebäudeinternes Elektrogerät 120 mittels des Netzwerkschlüssels kommunizieren können, initiiert der Prozessor 113 mittels Übergabe von Steuerbefehlen 306 an die zweite Kommunikationsschnittstelle 112 eine Pairing-Prozedur 116 mit dem gebäudeinternen Elektrogerät 120. Die einzelnen Befehlssequenzen der Pairing-Prozedur 116 werden von dem gebäudeinternen Elektrogerät 120 empfangen, ausgeführt und über die zweite Kommunikationsschnittstelle 112 bestätigt. Die zweite Kommunikationsschnittstelle 112 übermittelt diese Bestätigungen mittels Steuerbefehlen 308 an den Prozessor 113. Nach Abschluss des Pairings lässt sich das gebäudeinterne Elektrogerät über die Pairing-Schnittstelle 116 durch die gebäudeinterne Basisstation steuern.

Fig. 4 zeigt eine schematische Darstellung eines Gebäudeautomatisierungssystems 400 mit gebäudeinterner Basisstation 110 gemäß einer weiteren Ausführungsform. Das Gebäudeautomatisierungssystem 400 ist eine Ausführungsform des in Figur 1 beschriebenen Gebäudeautomatisierungssystems 100.

Bei dem Gebäudeautomatisierungssystem 400 ist der oben zu Figur 1 beschriebene erste Schritt des Erfassens einer Liste der neu anzulernenden Geräte (Smart Home Geräte/ Home Base) separat zu dem oben beschriebenen zweiten Schritt des Bereitstellens der Liste der neu zu lernenden Smart Home Geräte (z.B. Sensoren, Aktoren) an die Home Base dargestellt, so dass sich der Pairing Prozess stark vereinfacht und/oder vollständig automatisiert ausgeführt werden kann.

Der erste Schritt ist durch die Anmelde-Prozedur 422 realisiert, die mittels eines Smartphones oder PCs 410 oder auch mit einem Webbrowser der gebäudeinternen Basisstation 110 durchgeführt werden kann. Dabei überträgt der Web-Server 411 des Smartphone/PC 410 ein Anfrage zur Anmeldung 422 an den Anmeldeserver 421, beispielsweise mit Authentifizierung des Benutzers des Heimnetzes 150. Die Anfrage kann bereits vor der Installation des Heimnetzes erfolgen, beispielsweise um eine geeignete gebäudeinterne Basisstation 410 und/oder zugehörige gebäudeinterne Elektrogeräte 120 für das Heimnetzwerk 150 zu erwerben. Mit der Anmelde-Prozedur 422 werden die Geräte- IDs erfasst, d.h. Geräte-10 414 der gebäudeinternen Basisstation 110 und Geräte-IDs 413 der einen oder mehreren gebäudeinternen Elektrogeräte 120. Die Erfassung der Geräte-IDs 414, 413 kann auch dann erfolgen, wenn diese noch nicht beim Benutzer des Heimnetzes installiert sind, sondern sich noch im Lager oder im Verkaufsladen befinden. Damit kann im Rahmen von vorhandenen Endkundenprozessen, beispielsweise eines Einkaufsprozesses des Endkunden bzw. Benutzers des Heimnetzwerks (beispielsweise im Ladengeschäft oder Online-Shop), zusätzlich zum kaufmännischen Barcode der (vorhandene) Barcode mit der eindeutigen Produkt ID des Smart Home Geräts (d.h. gebäudeinternen Elektrogeräts und gebäudeinterner Basisstation) erfasst werden. Dort kann auch der jeweilige Netzwerkschlüssel vergeben werden. Erfindungsgemäß können dabei mehrere Geräte IDs 414, 413 einem Endnutzer-Konto, d.h. einer dem Endnutzer zugeordneten Liste von Produkten, zugeordnet werden. Dem Endnutzer-Konto ist beispielsweise ein Lizenzcode für die Smart Home Applikation zugeordnet, über den er die mehreren Geräte-IDs 413, 414 einbinden kann. D.h. während des Anmeldeprozesses 422 bzw. des Einkaufsprozesses können die Geräte IDs der Smart Home Geräte (gebäudeinterne Elektrogeräte) und die Geräte ID der Home Base (gebäudeinterne Basisstation) gesammelt und dem Endkunden zugeordnet werden. Auf dieser Basis kann das Hausnetz 150 vorkonfiguriert werden.

Der Anmeldeserver 421 hat Zugang zu einem Datenserver 423, auf dem eine entsprechende Liste von Geräte-IDs für entsprechende Heimnetz-Benutzer gespeichert ist bzw. bei der Anmeldung 422 eines Benutzers ein entsprechender Eintrag in der Liste erzeugt wird. Beispielsweise kann diese Liste mehrere Einträge enthalten, wobei jeder Eintrag eine Identifikation eines Benutzers oder Kunden aufweist und zu dieser Benutzer-ID jeweils eine Geräte-ID einer gebäudeinternen Basisstation des Heimnetzes des Benutzers und ein oder mehrere Geräte-IDs von dem Heimnetz zugeordneten gebäudeinternen Elektrogeräten. Alternativ kann statt der Benutzer-ID auch eine Identifikation des Heimnetzes des Benutzers vorgesehen sein. Nachdem der entsprechende Eintrag in der Liste vorliegt, bestätigt der Anmeldeserver 421 die Anmeldung 422 des Benutzers.

In dem zweiten Schritt, der beispielsweise durch die oben beschriebene Registrierung beim gebäudeexternen Konfigurationsserver 130 realisiert werden kann, meldet sich die Home Base (gebäudeinterne Basisstation) beim zentralen Konfigurationsserver 130 (beispielsweise in der Cloud 420) an. Der Benutzer kann seinen persönlichen Registrierungslink mit seiner Endnutzer-Konto ID nutzen und sich beim gebäudeexternen Konfigurationsserver 130 bzw. in der Cloud 420 identifizieren. Dadurch kann der gebäudeexterne Konfigurationsserver 130 bzw. die Cloud 420 folgende Dinge umsetzen: Eine sich zur Neuinstallation meldende Home Base 110 kann genau einem Endnutzer zugeordnet werden. Der obigen Home Base 110 können die (durch den Endkunden gekauften) Endgeräte 120 zugeordnet werden und auf Netzwerkebene die entsprechenden Adressen vergeben werden.

Die Smart Home Endgeräte 120 können zusätzlich zu den Installationsroutinen einen Auto-Konfigurations-Mode, bei dem nach dem erstmaligen Aktivieren der Stromversorgung und solange sie keine Netzwerkadressen erhalten haben die Smart Home Endgeräte 120 zeitweise (ggf. mit veränderlichem Abstand) in den Konfigurations-Modus wechseln und somit für den obigen Registrierungs-Prozess 114 bereitstehen (u.a. zum Empfang der individuellen Netzwerkadressen). Alternativ kann der Konfigurations-Modus manuell angestoßen werden.

Die Registrierung 114 kann dann unabhängig von der Anmeldung 422 erfolgen, beispielsweise wie oben zu den Figuren 1 bis 3 oder wie im Folgenden beschrieben. Die erste Kommunikationsschnittstelle 111 der gebäudeinternen Basisstation 110 überträgt eine Registrierungsanfrage 114a zu dem gebäudeexternen Konfigurationsserver 130. Die Registrierungsanfrage 114a umfasst eine erste Geräteidentifikation 414 der gebäudeinternen Basisstation 110. Die erste Kommunikationsschnittstelle 111 empfängt eine Antwort 114b auf die Registrierungsanfrage 114a von dem Konfigurationsserver 130, welche einen Netzwerkschlüssel des Heimnetzes und optional eine erste Netzwerkadresse zur Zuweisung zu der gebäudeinternen Basisstation 110 und optional eine oder mehrere weitere Netzwerkadresse zur Zuweisung zu dem zumindest einen gebäudeinternen Elektrogerät 120 umfasst. Die optional zugewiesenen Netzwerkadressen von gebäudeinterner Basisstation 110 und gebäudeinternen Elektrogeräten 120 können beispielsweise Netzwerkadressen eines Subnetzwerkes umfassen, z.B. des dem Heimnetzwerk zugeordneten Subnetzwerks. Die optional zugewiesenen Netzwerkadressen können jeweils IP-Adresse und Port-Nummer umfassen.

Die zweite Kommunikationsschnittstelle 112 dient zur Kommunikation mit dem gebäudeinternen Elektrogerät 120. Die zweite Kommunikationsschnittstelle 112 überträgt den Netzwerkschlüssel und optional die empfangene weitere Netzwerkadresse an das gebäudeinterne Elektrogerät 120. Die zweite Kommunikationsschnittstelle 112 koppelt dann das gebäudeinterne Elektrogerät 120 mit der gebäudeinternen Basisstation 110 unter Nutzung des Netzwerkschlüssels und optional unter Nutzung der zugewiesenen Netzwerkadressen.

Die zweite Kommunikationsschnittstelle 112 kann insbesondere einen Pairing-Prozess zum Koppeln 116 des gebäudeinternen Elektrogeräts 120 mit der gebäudeinternen Basisstation 110 initiieren.

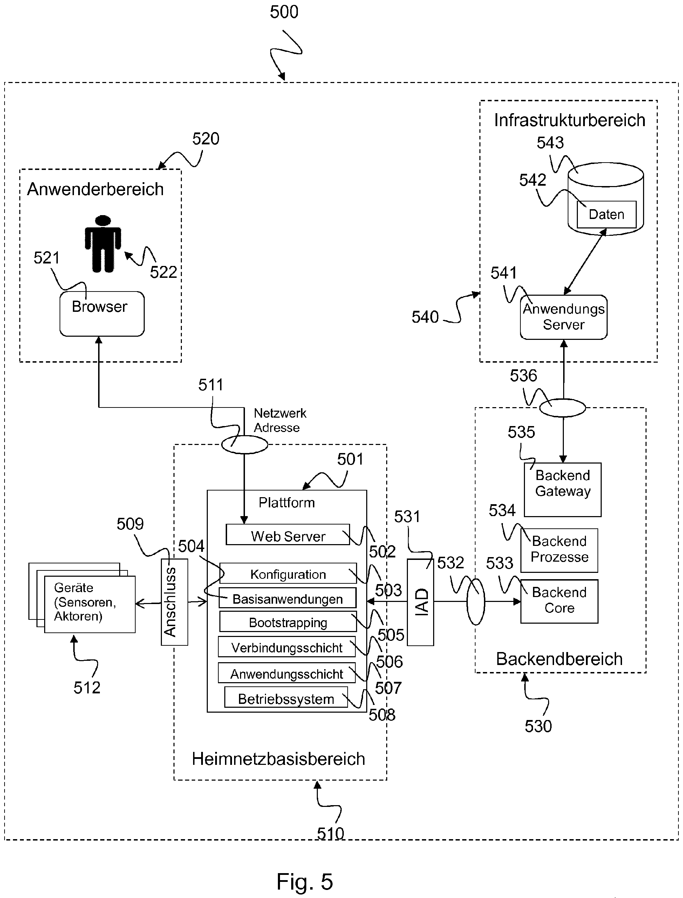

Fig. 5 zeigt eine schematische Darstellung eines Gebäudeautomatisierungssystems 500 gemäß einer weiteren Ausführungsform.

Das Gebäudeautomatisierungssystem 500 umfasst einen Heimnetzbasisbereich 510, einen Anwenderbereich 520, einen Backendbereich 530 und einen Infrastrukturbereich 540. An den Heimnetzbasisbereich 510 sind über einen Anschluss 509 verschiedene elektrische Geräte, insbesondere Sensoren und Aktoren des Heimnetzes gekoppelt. Der Heimnetzbasisbereich 510 umfasst eine Heimautomatisierungsplattform bzw. Gebäudeautomatisierungsplattform 501, die ein oder mehrere Prozessoren umfassen kann. Auf der Gebäudeautomatisierungsplattform 501 sind verschiedene Softwareapplikationen installiert, die hier nur beispielhaft dargestellt sind, unter anderem ein Betriebssystem 508, eine Anwendungsschicht 507, eine Verbindungsschicht 506, eine Bootstrapping-Anwendung 505, Basisanwendungen 504, eine Konfigurationsanwendung sowie ein Web Server 502. Es können sich auf der Gebäudeautomatisierungsplattform 501 noch eine Vielzahl weiterer Anwendungen befinden, die hier nicht näher beschrieben sind.

Der Web Server 502 ist über einen Netzwerkadapter 511, der durch eine Netzwerkadresse, beispielsweise eine IP-Adresse ansprechbar ist, mit einem Browser 521 des Anwenderbereichs 520 gekoppelt, so dass ein Anwender 522 über den Browser 521 auf den Web Server 502 des Heimnetzbasisbereichs 510 zugreifen kann.

Die Gebäudeautomatisierungsplattform 501 ist über ein IAD (Internet Access Device, Internetzugriffseinrichtung) 531 mit einem Zugangspunkt 532 des Backendbereichs 530 verbunden. Der Zugangspunkt 532 gewährt Zugang zum Backend Core 533 und den Backend Prozessen 534. Der Backendbereich 530 ist über ein Backend Gateway 535 und einen Netzwerkadapter 536 mit einem Anwendungsserver 541 des Infrastrukturbereichs 540 verbunden, welcher Zugang zu auf einem Datenspeicher 543 gespeicherten Daten 542, beispielsweise mit einer Liste von Geräte-IDs, wie oben zu den Figuren 1 bis 4 beschrieben, gewährt.

Die in Figur 1 beschriebene gebäudeinterne Basisstation 110 kann in dem Gebäudeautomatisierungssystem 500 der Figur 5 dem Heimnetzbasisbereich 510 entsprechen. Die in Fig. 1 beschriebene erste Kommunikationsschnittstelle 111 kann dem IAD Anschluss 531 entsprechen, der die Gebäudeautomatisierungsplattform 501 über den Backend-Bereich 530 mit dem Infrastrukturbereich 540 koppelt, in dem die Konfigurationsdaten 542 abgelegt sein können. Die in Fig. 1 beschriebene in dem gebäudeexternen Konfigurationsserver 130 abgelegte Liste von Geräte IDs kann den in dem Datenspeicher 543 des Infrastrukturbereichs 540 abgelegten Daten 541 entsprechen. Die Gebäudeautomatisierungsplattform 501 kann über den Backendbereich 530 auf den Infrastrukturbereich 540 zugreifen, um von dort beispielsweise die Daten 542 herunterzuladen, beispielsweise über Eingabe einer Internetadresse des Anwendungsservers 541 des Infrastrukturbereichs 540. Die in Fig. 1 beschriebene zweite Kommunikationsschnittstelle 112 kann dem Anschluss 509 entsprechen, der die Gebäudeautomatisierungsplattform 501 mit einem gebäudeinternen Elektrogerät 512 koppelt und eine Gerätekennung des gebäudeinternen Elektrogeräts 512 empfangen kann. Der in Fig. 1 beschriebene Prozessor 113 kann der Gebäudeautomatisierungsplattform 501 entsprechen.

Die Gebäudeautomatisierungsplattform 501 kann ausgelegt sein, eine Registrierungsanfrage zu dem gebäudeexternen Anwendungsserver 541 zu übertragen, wobei die Registrierungsanfrage eine erste Geräteidentifikation der Gebäudeautomatisierungsplattform 501 umfasst; eine Antwort auf die Registrierungsanfrage von dem Anwendungsserver 541 zu empfangen, wobei die Antwort einen Netzwerkschlüssel des Heimnetzwerkes und optional eine erste Netzwerkadresse zur Zuweisung zu der Gebäudeautomatisierungsplattform 501 des Heimnetzwerks und optional eine weitere Netzwerkadresse zur Zuweisung zu dem zumindest einen gebäudeinternen Elektrogerät 512 des Heimnetzwerks umfasst; und den Netzwerkschlüssel und optional die empfangene weitere Netzwerkadresse an das zumindest eine gebäudeinterne Elektrogerät 512 zu übertragen und das zumindest eine gebäudeinterne Elektrogerät 512 mit der Gebäudeautomatisierungsplattform 501 unter Nutzung des Netzwerkschlüssels und optional der zugewiesenen Netzwerkadressen zu koppeln.

Ein Aspekt der Erfindung umfasst auch ein Computerprogrammprodukt, das direkt in den internen Speicher eines digitalen Computers geladen werden kann und Softwarecodeabschnitte umfasst, mit denen das zu den Figuren 1-4 beschriebene Verfahren ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, eine Registrierungsanfrage 114a von der gebäudeinternen Basisstation 110 zu einem gebäudeexternen Konfigurationsserver 130 zu übertragen, wobei die Registrierungsanfrage 114a eine erste Geräteidentifikation der gebäudeinternen Basisstation 110 umfasst; die erste Geräteidentifikation durch den Konfigurationsserver 130 basierend auf einem Vergleich mit einer vorgegebenen Liste 423 von Geräteidentifikationen zu verifizieren; ansprechend auf eine positive Verifikation der ersten Geräteidentifikation eine Antwort 114b auf die Registrierungsanfrage 114a von dem Konfigurationsserver 130 an die gebäudeinterne Basisstation 110 zu übertragen, wobei die Antwort 114b einen Netzwerkschlüssel des Heimnetzwerks 150 umfasst; und das zumindest eine gebäudeinterne Elektrogerät 120 des Heimnetzwerks 150 mit der gebäudeinternen Basisstation 110 des Heimnetzwerks 150 unter Nutzung des Netzwerkschlüssels zu koppeln.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise als Prozessor einer Basisstation in einem gebäudeinternen Kommunikationsnetzwerk wie in den Figuren 1 bis 5 beschrieben, oder in einem gebäudeexternen Kommunikationsnetzwerk angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Gebäudeautomatisierungssystem bzw. Kommunikationssystem mit gebäudeinterner Basisstation
- 110:: gebäudeinterne Basisstation bzw. Home Base
- 111:: erste Kommunikationsschnittstelle
- 112:: zweite Kommunikationsschnittstelle
- 113:: Prozessor
- 114a:: Registrierungsanfrage
- 114b:: Antwort auf Registrierungsanfrage
- 116:: Koppeln oder Pairing
- 120:: gebäudeinternes Elektrogerät bzw. Smart Home Gerät bzw. Sensor/Aktor
- 130:: gebäudeexterner Konfigurationsserver
- 150:: Heimnetzwerk, Netzwerk im Gebäude, Kommunikationsnetzwerk für den Heimbereich

- 200:: Verfahren zur Inbetriebnahme eines Heimnetzes mit gebäudeinterner Basisstation und gebäudeinternem Elektrogerät
- 201:: 1. Schritt: Übertragen Registrierungsanfrage mit erster Geräte-ID
- 202:: 2. Schritt: Verifizieren der ersten Geräte-ID
- 203:: 3. Schritt: Übertragen einer Antwort auf Registrierungsanfrage
- 204:: 4. Schritt: Koppeln Basisstation mit Elektrogerät

- 300:: Gebäudeautomatisierungssystem bzw. Kommunikationssystem mit gebäudeinterner Basisstation
- 301:: Datenspeicher
- 302:: Übergabe von Steuerbefehlen
- 304:: Bestätigung von Steuerbefehlen
- 306:: Übergabe von Steuerbefehlen
- 308:: Bestätigung von Steuerbefehlen
- 312:: Daten

- 400:: Gebäudeautomatisierungssystem bzw. Kommunikationssystem mit gebäudeinterner Basisstation
- 410:: Smartphone oder PC
- 411:: Web-Server
- 412:: Lesegerät oder Scanner
- 413:: Geräte-ID des gebäudeinternen Elektrogeräts
- 414:: Geräte-ID der gebäudeinternen Basisstation
- 420:: Cloud
- 421:: Anmeldeserver
- 423:: Datenserver mit Liste von Geräte-IDs
- 422:: Anmeldung

- 500:: Gebäudeautomatisierungssystem
- 501:: Gebäudeautomatisierungsplattform
- 502:: Web Server
- 503:: Konfigurationsschicht
- 504:: Basisanwendungsschicht
- 505:: Bootstrapping-Schicht
- 506:: Verbindungsschicht
- 507:: Anwendungsschicht
- 508:: Betriebssystem
- 509:: Anschluss zu elektrischen Geräten
- 510:: Heimnetzbasisbereich, Basisstation
- 511:: Netzwerkadapter
- 520:: Anwenderbereich
- 521:: Browser
- 522:: Anwender, Benutzer
- 530:: Backendbereich
- 531:: IAD, Internet Access Device, Internetzugangseinrichtung
- 532:: Zugangspunkt zu Backendbereich
- 533:: Backend Core
- 534:: Backend Prozesse
- 535:: Backend Gateway
- 536:: Netzwerkadapter
- 540:: Infrastrukturbereich
- 541:: Anwendungsserver
- 542:: Daten, z.B. Liste mit Geräte-IDs
- 543:: Datenspeicher

## Patentansprüche

1. Verfahren (200) zur Inbetriebnahme eines Heimnetzwerks (150) mit einer Basisstation (110) und zumindest einem Elektrogerät (120), wobei folgende Verfahrensschritte ausgeführt werden:
Übertragen (201) einer Registrierungsanfrage (114a) von der Basisstation (110) zu einem gebäudeexternen Konfigurationsserver (130), wobei die Registrierungsanfrage (114a) eine erste Geräteidentifikation der Basisstation (110) umfasst;
Verifizieren (202) der ersten Geräteidentifikation durch den Konfigurationsserver (130) basierend auf einem Vergleich mit einer vorgegebenen Liste (423) von Geräteidentifikationen, wobei die vorgegebene Liste (423) von Geräteidentifikationen aus einem vorherigen Konfigurationsprozess (422) hervorgeht, bei welchem Benutzeridentifikationen der Liste (423) mit zugehörigen Geräteidentifikationen von Basisstation (110) und Elektrogeräten (120) basierend auf einer Anmeldung (422) der jeweiligen Benutzer erzeugt werden, indem Geräteidentifikationen der Basisstation (110) und des zumindest einen Elektrogeräts (120) mit einem Barcode-Lesegerät oder mit einem Smartphone eingelesen und durch Übertragen einer eine Benutzeridentifikation umfassenden Registrierungsanfrage eines Benutzers des Heimnetzwerks (150) diesem Benutzer zugeordnet werden;
ansprechend auf eine positive Verifikation der ersten Geräteidentifikation: Übertragen (203) einer Antwort (114b) auf die Registrierungsanfrage (114a) von dem Konfigurationsserver (130) an die Basisstation (110), wobei die Antwort (114b) einen Netzwerkschlüssel des Heimnetzwerks umfasst; und
Übertragen des Netzwerkschlüssels durch die Basisstation (110) an das zumindest eine Elektrogerät (120) des Heimnetzwerks (150) sowie Koppeln (204, 116) des zumindest einen Elektrogeräts (120) mit der Basisstation (110) unter Nutzung des Netzwerkschlüssels.

2. Verfahren (200) nach Anspruch 1,
wobei das Koppeln (204, 116) des zumindest einen Elektrogeräts (120) des Heimnetzwerks (150) mit der Basisstation (110) des Heimnetzwerks (150) ein Pairing umfasst.

3. Verfahren (200) nach Anspruch 1 oder 2, wobei der Konfigurationsprozess ferner folgendes umfasst:
Zuordnen von Raumnamen des Heimnetzwerks (150) zu den Geräteidentifikationen von Basisstation (110) und Elektrogeräten (120).

4. Verfahren (200) nach einem der Ansprüche 1 bis 3,
wobei das Übertragen der Registrierungsanfrage des Benutzers ein Aufrufen eines persönlichen Registrierungslink des Benutzers umfasst.

5. Verfahren (200) nach einem der vorstehenden Ansprüche,
wobei die vorgegebene Liste (423) von Geräteidentifikationen für jede Geräteidentifikation einen Lizenzcode zur Nutzung des zumindest einen zugeordneten Elektrogeräts (120) und der zugeordneten Basisstation (110) umfasst.

6. Basisstation (110) zur Inbetriebnahme in einem Heimnetzwerk (150) mit Basisstation (110) und zumindest einem Elektrogerät (120), umfassend eine erste Kommunikationsschnittstelle (111) zur Kommunikation mit einem gebäudeexternen Konfigurationsserver (130), eine zweite Kommunikationsschnittstelle (112) zur Kommunikation mit dem zumindest einen Elektrogerät (120) und einen Prozessor (113), welcher auch durch die erste Kommunikationsschnittstelle 111 und/oder die zweite Kommunikationsschnittstelle (112) realisiert sein kann, wobei die Basisstation die Merkmale aufweist, dass
die erste Kommunikationsschnittstelle (111) ausgebildet ist, aufgrund von Steuerbefehlen (304) des Prozessors (113), eine Registrierungsanfrage (114a) mit einer ersten, durch einen Vergleich mit einer in einem ersten Konfigurationsprozess erzeugten Liste (423) von Geräteidentifikationen zu verifizierenden Geräteidentifikation der Basisstation (110) zu dem gebäudeexternen Konfigurationsserver (130) zu übertragen und, ansprechend auf eine positive Verifikation der ersten Geräteidentifikation, eine von dem Konfigurationsserver (130) ausgesendete Antwort (114b) mit einem Netzwerkschlüssel des Heimnetzwerks zu empfangen,
die zweite Kommunikationsschnittstelle (112) ausgebildet ist, aufgrund von Steuerbefehlen (306) des Prozessors (113), den empfangenen Netzwerkschlüssel an das zumindest eine Elektrogerät (120) zu übertragen und das zumindest eine Elektrogerät (120) mit der Basisstation (110) unter Nutzung des Netzwerkschlüssels zu koppeln.

7. Basisstation (110) nach Anspruch 6,
wobei die zweite Kommunikationsschnittstelle (112) ausgebildet ist, einen Pairing-Prozess zum Koppeln (116) des zumindest einen Elektrogeräts (120) mit der Basisstation (110) zu initiieren.

8. Basisstation (110) nach Anspruch 6 oder 7, mit:
einer Konfigurationsschnittstelle,
wobei die zweite Kommunikationsschnittstelle (112) ausgebildet ist, bei Aktivierung der Konfigurationsschnittstelle die Antwort mit dem Netzwerkschlüssel an das Elektrogerät (120) zu übertragen.

9. Basisstation (110) nach Anspruch 8,
wobei die Konfigurationsschnittstelle einen manuell betätigbaren Aktivierungsschalter umfasst.

## Claims

1. Method (200) for starting up a home network (150) having a base station (110) and at least one electrical device (120), wherein the following method steps are carried out:
transmitting (201) a registration request (114a) from the base station (110) to a building-external configuration server (130), wherein the registration request (114a) comprises a first device identification of the base station (110);
verifying (202) the first device identification by means of the configuration server (130) on the basis of a comparison with a predefined list (423) of device identifications, wherein the predefined list (423) of device identifications comes from a prior configuration process (422) that involves user identifications of the list (423) with associated device identifications from the base station (110) and electrical devices (120) being generated on the basis of a logon (422) by the respective user by virtue of device identifications of the base station (110) and of the at least one electrical device (120) being read in using a barcode reader or using a smartphone and being assigned to this user by transmitting a registration request, which comprises a user identification, from a user of the home network (150) ;
in response to a positive verification of the first device identification:
transmitting (203) a response (114b) to the registration request (114a) from the configuration server (130) to the base station (110), wherein the response (114b) comprises a network key of the home network; and
transmitting the network key by means of the base station (110) to the at least one electrical device (120) of the home network (150) and coupling (204, 116) the at least one electrical device (120) to the base station (110) by using the network key.

2. Method (200) according to Claim 1,
wherein the coupling (204, 116) of the at least one electrical device (120) of the home network (150) to the base station (110) of the home network (150) comprises a pairing.

3. Method (200) according to Claim 1 or 2, wherein the configuration process also comprises the following:
assigning room names of the home network (150) to the device identifications of the base station (110) and electrical devices (120).

4. Method (200) according to one of Claims 1 to 3,
wherein the transmitting of the registration request from the user comprises calling a personal registration link of the user.

5. Method (200) according to one of the preceding claims,
wherein the predefined list (423) of device identifications comprises a licence code for each device identification for use of the at least one assigned electrical device (120) and the assigned base station (110) .

6. Base station (110) for start-up in a home network (150) having the base station (110) and at least one electrical device (120), comprising a first communication interface (111) for communicating with a building-external configuration server (130), a second communication interface (112) for communicating with the at least one electrical device (120) and a processor (113), which can also be implemented by the first communication interface (111) and/or the second communication interface (112), wherein the base station has the features that
the first communication interface (111) is designed to take control commands (304) from the processor (113) as a basis for transmitting a registration request (114a) with a first device identification of the base station (110), which device identification needs to be verified by means of a comparison with a list (423) of device identifications that is generated in a first configuration process, to the building-external configuration server (130) and, in response to a positive verification of the first device identification, to receive a response (114b), transmitted by the configuration server (130), with a network key of the home network,
the second communication interface (112) is designed to take control commands (306) from the processor (113) as a basis for transmitting the received network key to the at least one electrical device (120) and to couple the at least one electrical device (120) to the base station (110) by using the network key.

7. Base station (110) according to Claim 6,
wherein the second communication interface (112) is designed to initiate a pairing process for coupling (116) the at least one electrical device (120) to the base station (110).

8. Base station (110) according to Claim 6 or 7, having:
a configuration interface,
wherein the second communication interface (112) is designed to transmit the response with the network key to the electrical device (120) when the configuration interface is activated.

9. Base station (110) according to Claim 8,
wherein the configuration interface comprises a manually operable activation switch.

## Revendications

1. Procédé (200) de mise en service d'un réseau domestique (150) comprenant une station de base (110) et au moins un appareil électrique (120), le procédé comprenant les étapes suivantes :
transmission (201) d'une requête d'enregistrement (114a) par la station de base (110) à un serveur de configuration (130) externe au bâtiment, la requête d'enregistrement (114a) comprenant une première identification d'appareil de la station de base (110) ;
vérification (202) de la première identification d'appareil à l'aide du serveur de configuration (130) sur la base d'une comparaison avec une liste spécifiée (423) d'identifications d'appareil, la liste spécifiée (423) d'identifications d'appareil provenant d'un processus de configuration précédent (422) dans lequel des identifications d'utilisateur de la liste (423), auxquels sont associés des identifications d'appareil, sont générées par la station de base (110) et des appareils électriques (120) sur la base d'une demande de connexion (422) de l'utilisateur respectif en ce que des identifications d'appareil de la station de base (110) et de l'au moins un appareil électrique (120) sont lues au moyen d'un lecteur de code à barres ou d'un Smartphone et sont associées à un utilisateur par transmission d'une deuxième requête d'enregistrement, comprenant une identification d'utilisateur, de cet utilisateur du réseau domestique (150) ;
en réponse à une vérification positive de la première identification d'appareil : transmission (203) d'une réponse (114b) à la requête d'enregistrement (114a) par le serveur de configuration (130) à la station de base (110), la réponse (114b) comprenant une clé de réseau du réseau domestique ; et
transmission de la clé de réseau par la station de base (110) à l'au moins un appareil électrique (120) du réseau domestique (150) et raccordement (204, 116) de l'au moins un appareil électrique (120) à la station de base (110) à l'aide de la clé de réseau.

2. Procédé (200) selon la revendication 1,
le raccordement (204, 116) de l'au moins un appareil électrique (120) du réseau domestique (150) à la station de base (110) du réseau domestique (150) comprenant un appariement.

3. Procédé (200) selon la revendication 1 ou 2, le processus de configuration comprenant en outre :
l'association des noms de pièce du réseau domestique (150) aux identifications d'appareil par la station de base (110) et les appareils électriques (120).

4. Procédé (200) selon l'une des revendications 1 à 3,
la transmission de la requête d'enregistrement de l'utilisateur comprenant l'appel d'un lien d'enregistrement personnel de l'utilisateur.

5. Procédé (200) selon l'une des revendications précédentes,
la liste spécifiée (423) d'identifications d'appareil comprenant pour chaque identification d'appareil un code de licence destiné à l'utilisation de l'au moins un appareil électrique associé (120) et de la station de base associée (110).

6. Station de base (110) destinée à la mise en service dans un réseau domestique (150) comprenant une station de base (110) et au moins un appareil électrique (120), ladite station de base comprenant une première interface de communication (111) destinée à la communication avec un serveur de configuration (130) extérieur au bâtiment, une deuxième interface de communication (112) destinée à la communication avec l'au moins un appareil électrique (120) et un processeur (113) qui peut également être réalisé par la première interface de communication 111 et/ou la deuxième interface de communication (112), la station de base comportant les caractéristiques suivantes :
la première interface de communication (111) est conçue pour transmettre au serveur de configuration (130) externe au bâtiment, sur la base d'instructions de commande (304) du processeur (113), une requête d'enregistrement (114a) comportant une identification d'appareil de la station de base (110) qui doit être vérifiée par comparaison avec une liste (423) d'identifications d'appareil dans un premier processus de configuration et, en réponse à une vérification positive de la première identification d'appareil, pour recevoir une réponse (114b) envoyée par le serveur de configuration (130) et comprenant une clé de réseau du réseau domestique,
la deuxième interface de communication (112) est conçue pour transmettre la clé de réseau reçue à l'au moins un appareil électrique (120) sur la base des instructions de commande (306) du processeur (113) et pour raccorder l'au moins un appareil électrique (120) à la station de base (110) à l'aide de la clé de réseau.

7. Station de base (110) selon la revendication 6,
la deuxième interface de communication (112) étant conçue pour lancer un processus d'appariement pour raccorder (116) l'au moins un appareil électrique (120) à la station de base (110).

8. Station de base (110) selon la revendication 6 ou 7, comprenant :
une interface de configuration,
la deuxième interface de communication (112) étant conçue pour transmettre la réponse avec la clé de réseau à l'appareil électrique (120) lorsque l'interface de configuration est activée.

9. Station de base (110) selon la revendication 8,
l'interface de configuration comprenant un commutateur d'activation actionnable manuellement.
